# EUROPEAN PATENT APPLICATION

(11) **EP 4 009 038 A1**
(43) Date of publication of application: **08.06.2022**
(21) Application number: 19945046.1
(22) Date of filing: 10.09.2019
(51) Int. Cl.: G01N 21/88, G06T 7/00

(54) **METHOD AND DEVICE FOR DETECTING MECHANICAL EQUIPMENT PARTS**

(71) Applicant: Siemens Energy Global GmbH & Co. KG, 81739 München (DE)
(72) Inventor: CAO, Diansong, Beijing 100176 (CN); CHENG, Xuan, Beijing 100088 (CN); LUO, Zhiyu, Beijing 100034 (CN); WU, Xiaodong, Beijing 100102 (CN); SHEN, Yixuan, Shanghai 200093 (CN); ZHAO, Jie, QingDao, Shandong 266520 (CN); LI, Gongxiang, QingDao, Shandong 266031 (CN)
(74) Representative: Isarpatent
(86) International application number: PCT/CN2019/105228
(87) International publication number: WO 2021/046726

(57) **Abstract**

A method for detecting mechanical equipment parts, comprising: obtaining an image of a part; extracting a feature from the image by using a machine learning model, and identifying at least one type of surface defect on the basis of the feature to obtain an identification result; and determining whether to replace the part on the basis of the identification result and a predetermined standard of the part. The method reduces the difficulty of detecting a part, can quickly and accurately identify the surface defect of the part and determine whether the part needs to be replaced, thereby improving the work efficiency of a maintenance engineer and saving physical strength, and shortens the time for mechanical equipment to stop operating for maintenance, thus improving the operating efficiency of the mechanical equipment. The method is completely and automatically executed by a computer, thereby avoiding manually checking errors, improving the accuracy of detection results, and thus improving the reliability of operation of the mechanical equipment.

## Description

### Technical field

The present disclosure relates to the field of mechanical equipment maintenance, in particular to a method and apparatus for checking a mechanical equipment component, a computing device, a computer-readable storage medium and a program product.

### Background art

When mechanical equipment has been operating for a period of time, defects such as scratches, cracks and spots will often form on the surface of components of the mechanical equipment. If the surface defects are serious, they may affect the normal operation of the mechanical equipment. Thus, it is necessary to inspect these components periodically, and identify the components that have surface defects, in order to perform servicing or replacement, thereby ensuring reliable operation of the mechanical equipment. Taking a gas turbine as an example, this generally has several hundred ceramic thermal insulation tiles. In a gas turbine maintenance operation, first of all the operation of the gas turbine needs to be stopped, then a maintenance engineer enters the combustion chamber of the gas turbine, and visually inspects cracks on each ceramic thermal insulation tile and assesses the positions of the cracks within a limited time, in order to judge whether ceramic thermal insulation tiles need to be replaced.

### Summary of the invention

In a conventional method for inspecting surface defects of components, due to the need to inspect several hundred components one by one, the maintenance engineer's inspection job is particularly onerous, and also takes up a lot of time, with the result that the mechanical equipment is stopped for a long time, affecting the operating efficiency of the mechanical equipment. In addition, because human inspection is easily affected by visual fatigue, reduced concentration and various other factors, the accuracy of inspection results is not stable enough, with errors in human inspection likely to occur, and this also affects reliable operation of the mechanical equipment.

A first embodiment of the present disclosure proposes a method for checking a mechanical equipment component, comprising: acquiring an image of the component; using a machine learning model to extract a feature from the image, and identifying at least one type of surface defect of the component based on the feature, to obtain an identification result; and judging whether to replace the component based on the identification result and a predetermined criterion of the component.

In this embodiment, a trained machine learning model is used to identify a surface defect of the component from the image of the component, and a comparison is made with a predetermined criterion to judge whether the component needs to be replaced. Compared with manual inspection, the method of the present disclosure reduces the difficulty involved in checking the component, being able to quickly and accurately detect a surface defect of the component and judge whether the component needs to be replaced, thereby increasing the working efficiency of maintenance engineers, saving physical effort, and shortening the time for which operation of the mechanical equipment is stopped to perform maintenance, and thus increasing the operating efficiency of the mechanical equipment. In addition, the entire method is performed automatically by computer, thus avoiding manual inspection errors, increasing the accuracy of the checking result, and thus increasing the reliability of mechanical equipment operation. In addition, compared with the detection of component surface defects based on geometric data of the component, the method of the present disclosure does not require a complex core algorithm to be developed, and avoids the difficulty and inaccuracy involved in obtaining geometric data of the component.

A second embodiment of the present disclosure proposes an apparatus for checking a mechanical equipment component, comprising: an image acquisition unit, configured to acquire an image of the component; a defect identification unit, configured to use a machine learning model to extract a feature from the image, and identify at least one type of surface defect of the component based on the feature, to obtain an identification result; and a criterion comparison unit, configured to judge whether to replace the component based on the identification result and a predetermined criterion of the component.

A third embodiment of the present disclosure proposes a computing device, comprising: a processor; and a memory, for storing a computer-executable instruction; when the computer-executable instruction is executed, the processor is caused to perform the method in the first embodiment.

A fourth embodiment of the present disclosure proposes a computer-readable storage medium, having stored thereon a computer-executable instruction for performing the method of the first embodiment.

A fifth embodiment of the present disclosure proposes a computer program product, tangibly stored on a computer-readable storage medium and comprising a computer-executable instruction which, when executed, causes at least one processor to perform the method of the first embodiment.

### Brief description of the figures

The features, advantages and other aspects of the embodiments of the present disclosure will become more obvious in conjunction with the figures and with reference to the detailed explanation below. A number of embodiments of the present disclosure are shown here in an exemplary and non-limiting fashion. In the figures:
Fig. 1 shows a method for checking a mechanical equipment component according to an embodiment of the present disclosure.
Fig. 2 shows a method for checking a ceramic thermal insulation tile of a gas turbine according to an embodiment of the present disclosure.
Fig. 3 shows an exemplary architecture of a machine learning model according to the embodiment of Fig. 2.
Fig. 4 shows a method for using an image of a ceramic thermal insulation tile to train a machine learning model according to the embodiment of Fig. 2.
Fig. 5 shows a method for using a trained machine learning model to identify a crack on a ceramic thermal insulation tile according to the embodiment of Fig. 2.
Fig. 6 shows an example of visual markers added at crack positions on an image of a ceramic thermal insulation tile according to the embodiment of Fig. 2.
Fig. 7 shows a method for judging whether a ceramic thermal insulation tile currently being checked needs to be replaced based on an identification result and an electronic template of the ceramic thermal insulation tile according to the embodiment of Fig. 2.
Fig. 8 shows an example of an electronic template superimposed on an image of a ceramic thermal insulation tile according to the embodiment of Fig. 2.
Fig. 9 shows a method for ordering a ceramic thermal insulation tile from a component ordering system based on a checking result and inventory information according to the embodiment of Fig. 2.
Fig. 10 shows an apparatus for checking a mechanical equipment component according to an embodiment of the present disclosure.
Fig. 11 shows a system for checking a mechanical equipment component according to an embodiment of the present disclosure.
Fig. 12 shows a block diagram of a computing device for checking a mechanical equipment component according to an embodiment of the present disclosure.

### Detailed description of embodiments

Various exemplary embodiments of the present disclosure are described in detail below with reference to the figures. Although the exemplary methods and apparatuses described below comprise software and/or firmware executed on hardware in other components, it should be noted that these examples are merely illustrative, and should not be regarded as limiting. For example, it is considered that any or all hardware, software and firmware components may be implemented exclusively in hardware, exclusively in software, or in any combination of hardware and software. Thus, although exemplary methods and apparatuses are described below, those skilled in the art should find it easy to understand that the examples provided are not intended to limit the manner in which these methods and apparatuses are realized.

In addition, the flow charts and block diagrams in the figures show system architectures, functions and operations in possible implementations of the method and system according to various embodiments of the present disclosure. It should be noted that the functions labelled in the boxes may also occur in a different order from that labelled in the figures. For example, two boxes shown consecutively may in fact be executed substantially in parallel, or may also sometimes be executed in the opposite order, depending on the functions concerned. It should also be noted that each box in the flow charts and/or block diagrams, and combinations of boxes in the flow charts and/or block diagrams, may be realized using a dedicated hardware-based system which executes a specified function or operation, or may be realized using a combination of dedicated hardware and computer instructions.

The terms "comprises" and "contains" and similar terms used herein are open terms, i.e. "comprises/contains but is not limited to", meaning that other content may also be included. The term "based on" is "at least based on". The term "an embodiment" means "at least one embodiment"; and the term "another embodiment" means "at least one other embodiment", and so on.

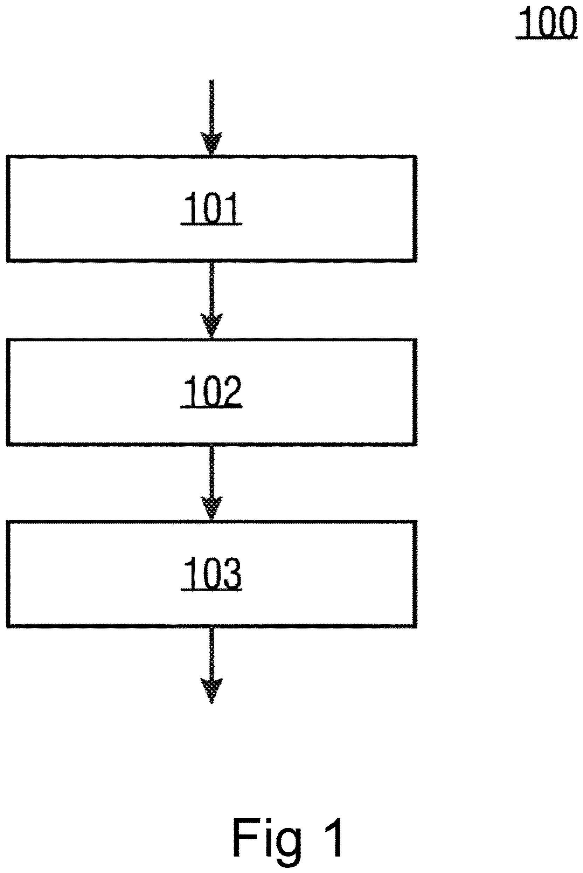

Fig. 1 shows a method for checking a mechanical equipment component according to an embodiment of the present disclosure. The mechanical equipment may be a gas turbine, a steam turbine, a wind turbine and a compressor, etc.; and the component thereof may be a ceramic thermal insulation tile, a stationary blade, a moving blade, a bearing, a gear, a sealing member, a fastener, a housing and a train wheel, etc. The surface defect of the component may for example be a scratch, crack or spot on the component surface, and may also be shallow wear on the surface of the component, edge wear or a missing corner, and so on.

Referring to Fig. 1, the method 100 begins at step 101. In step 101, an image of the component is obtained.

The image of the component may be acquired by an image acquisition device. The image acquisition device may include but is not limited to a video camera, a surveillance camera, a camera (for example an industrial camera CCD), a portable device with a camera (e.g. a smartphone, tablet computer), etc. For example, a camera may be installed in the vicinity of each item of mechanical equipment to acquire an image of a component of the mechanical equipment. As another example, a camera-equipped portable device carried by a maintenance engineer may take a photograph of a component of the mechanical equipment.

In some embodiments, one or more images may be acquired separately for each component that needs checking in the mechanical equipment, with only one component being checked each time. Multiple images of the same component may be used to separately perform checking multiple times, in order to ensure the accuracy of the checking result. For example, taking a gas turbine as an example, one or more photographs may be taken of several hundred ceramic thermal insulation tiles one by one, ensuring that each photograph contains a complete surface appearance image of the ceramic thermal insulation tile to be checked.

In other embodiments, an image containing at least two components may be acquired, so that at least two components can be checked simultaneously each time. Still taking a gas turbine as an example, for instance, a photograph may be taken of at least two ceramic thermal insulation tiles to be checked, ensuring that each photograph contains a complete surface appearance image of the at least two ceramic thermal insulation tiles.

In some embodiments, the method 100 further comprises (not shown in Fig. 1): detecting an edge of the component in the image of the component obtained, and subjecting the image of the component obtained to an affine transformation, in order to correct the image. In many cases, the image of the component obtained might not only include the component to be checked but also include a component located beside it, and the surface of the other component might be inclined in the image, or the color of the image is relatively dark. For example, when a maintenance engineer uses a portable device to take a photograph of the component, the angle of capture, capture time, ambient light or degree of operational proficiency might cause problems such as inclination of the surface of the component in the photograph, the photograph also including another component in addition to the component to be checked, or a dark photograph color. Thus, by detecting the edge of the component to be checked in the image of the component obtained, the position thereof in the image can be determined, thereby increasing the accuracy of subsequent checking. Detection of the edge of the component may be performed automatically by software; alternatively, an operator may label each vertex of the geometric shape of the component on the image, and software then identifies and connects these vertices to obtain the edge of the component. In addition, by subjecting the image of the component obtained to an affine transformation, it is possible to correct inclination of the component in the image; this helps to increase the convenience and accuracy of subsequent checking. In addition, the image of the component obtained may also be subjected to other pre-processing, e.g. smoothing, filtering, contrast stretching, etc., and this can likewise increase the accuracy of subsequent checking.

Continuing to refer to Fig. 1, the method 100 now proceeds to step 102. In step 102, a machine learning model is used to extract a feature from the image, and at least one type of surface defect of the component is identified based on the feature, to obtain an identification result.

In some embodiments, the machine learning model is a neural network model. In other embodiments, the machine learning model may also be another type of machine learning model. The machine learning model has been trained in advance. In some embodiments, different machine learning models may be trained based on different types of surface defect, i.e. one machine learning model only identifies one type of surface defect; this helps to increase the accuracy of checking. The image of the component may be provided to a specific type of machine learning model to identify a specific type of surface defect. For example, when it is necessary to check scratches on the component surface, the image of the component is provided to a machine learning model that specifically identifies scratches. The image of the component may also be separately provided to different machine learning models trained for different types of surface defect, so as to identify different types of surface defect. For example, when it is necessary to check scratches and shallow wear on the component surface, the image of the component may be separately provided to a machine learning model that identifies scratches and a machine learning model that identifies shallow wear.

In other embodiments, the same machine learning model may be trained based on multiple types of surface defect. That is to say, one machine learning model can identify multiple types of surface defect; this helps to increase checking speed. For example, one machine learning model is trained to be able to identify multiple different types of surface defect such as scratches, cracks and spots, and these different types of surface defect can be identified by providing the image of the component to this machine learning model. In other embodiments, the machine learning model may also be trained separately for different components.

In some embodiments, the machine learning model may be retrained periodically or when required. For example, when the trained machine learning model has already been used for a period of time, training samples may be added to train the machine learning model again. As another example, when the architecture of the machine learning model is changed, it is also necessary to retrain the machine learning model that has the new architecture.

In some embodiments, before the machine learning model is used, the method 100 further comprises training the machine learning model. Training the machine learning model first of all comprises constructing the machine learning model. The machine learning model may use combinations of models of all kinds in a cascaded fashion; for example, a model for extracting a feature and a model for classification are cascaded.

Next, a sample image of at least one type of surface defect is obtained to serve as a training sample; this training sample has an actual classification mark, e.g. the type of surface defect in the sample image. Photographs of at least one type of surface defect of the component may be taken, and these photographs may be marked manually to collect training samples; the collected training samples may be stored in and/or transmitted to a buffer, memory, high-speed cache or processor. Training samples may also be obtained from a network or an existing public database. The number of training samples may be determined as required. In addition, the training samples may be subjected to certain processing to generate additional training samples, in order to increase the robustness of the model. For example, white noise may be superimposed on the sample image obtained to perform blurring, and the image may be flipped, translated and/or rotated to generate an additional training sample. In some embodiments, the training samples may also be subjected to pre-processing, e.g. smoothing and filtering.

Next, the machine learning model may use a convolutional neural network to extract a feature from the sample image of the surface defect, and use a classifier to obtain a classification result corresponding to the feature of the sample image. The classification result may comprise the type of surface defect and a corresponding probability. In some embodiments, the machine learning model may also output information such as the position of the surface defect. Next, an error between the actual classification mark and/or information such as the position of the surface defect and an output obtained by means of the machine learning model is determined and minimized to adjust the weighting/parameters of the machine learning model, until the machine learning model converges. Once the machine learning model has been trained, it can be stored in a memory in text file format for future use.

It should be pointed out that it is not necessary to train the machine learning model in advance every time the machine learning model is used to check component surface defects. As mentioned above, once trained, the machine learning model may be saved in a memory. Thus, the trained machine learning model may be loaded directly when the machine learning model is used.

Thus, in step 102, when the trained machine learning model is used to identify a surface defect of the component, a feature is extracted from the inputted image of the component by means of the machine learning model, and a surface defect identification result is outputted based on the feature.

As stated above, when training a machine learning model, different machine learning models may be trained based on different types of surface defect, or the same machine learning model may be trained based on multiple types of surface defect. Thus, the type of surface defect that can be identified using a machine learning model is related to the training of the machine learning model. In some embodiments, a trained machine learning model may be used to identify a specific type of surface defect. For example, a maintenance engineer might be mainly interested in cracks on a component, and therefore may use a corresponding machine learning model to identify cracks on the component according to an image of the component. In other embodiments, a trained machine learning model may be used to identify multiple types of surface defect of a component.

The three functions of acquiring an image of a component, training a machine learning model and using the machine learning model for identification may be integrated on the same computing device, or two of these functions may be integrated on one computing device with the other function being implemented on another, different computing device; in addition, the three functions may also be separately implemented on three completely different computing devices.

In some embodiments, training a machine learning model and using the machine learning model for identification are implemented on different computing devices, but acquiring an image of a component and using the machine learning model for identification are implemented on the same computing device. For example, training of the machine learning model may be performed on a high-configuration workstation/server, and once training is complete, the machine learning model is saved in a memory of the workstation/server in text file format. A computing device (e.g. a tablet device, a portable device such as a smartphone, or another computing device, etc.) that needs to use the machine learning model sends a request to the workstation/server, in order to obtain the trained machine learning model. In embodiments having multiple machine learning models, a request for a specific machine learning model may be sent to the workstation/server as required.

In other embodiments, training a machine learning model may be implemented on the same computing device as using the machine learning model for identification, but acquiring an image of a component is implemented on another, different computing device. For example, training of the machine learning model may be performed on a high-configuration workstation/server, and once training is complete, the machine learning model is saved in a memory of the workstation/server in text file format. When the machine learning model is used for identification, a maintenance worker takes a photograph of the component by means of a portable device carried on his/her person (e.g. a tablet device, mobile phone, etc.), or a camera arranged in the vicinity of mechanical equipment captures an image of the component, then the image is sent to the workstation/server. After receiving the image of the component, the workstation/server uses the trained machine learning model to identify a surface defect of the component.

Continuing to refer to Fig. 1, after step 102, the method moves to step 103: judging whether to replace the component based on the identification result and a predetermined criterion of the component.

As mentioned above, the same component might have different types of surface defect, and different components might have the same type or different types of surface defect. The tolerance of a component for a surface defect (i.e. when the component needs to be replaced) is often related to several factors, e.g. the surface defect type, position, size, quantity, etc. Thus, a predetermined criterion of each component for each type of surface defect may be set in advance.

In some embodiments, the identification result comprises at least one of the following: the position of a surface defect on the component, the quantity of surface defects, the size of a surface defect, and the type of surface defect. In addition to being used for comparison with the predetermined criterion, the identification result may also be displayed on the image to help the operator understand the surface defect situation of the component, and may also be recorded in a database for the purpose of generating a report, or may also be collected for use in Big Data analysis to help improve the component or even the mechanical equipment itself.

In some embodiments, the predetermined criterion comprises any one of the following, or a combination of a number thereof: a position where the component is permitted to have a surface defect, the maximum number of surface defects permitted on the component, the maximum size of surface defect permitted on the component, and a type of surface defect that the component is permitted to have. For example, a particular component is only permitted to have a crack in a specific region, otherwise the component must be replaced. In such an embodiment, the predetermined criterion comprises the position where the component is permitted to have a surface defect. Thus, the position of a crack on the component that is obtained using a machine learning model is compared with the position where the component is permitted to have a crack, in order to judge whether the crack is located completely at the position where a crack is permitted; if so, the component does not need to be replaced, otherwise the component needs to be replaced. As another example, a particular component is only permitted to have shallow wear in a specific region, and is only permitted to have a crack that does not exceed a particular length, otherwise the component needs to be replaced. Thus, the position of shallow wear that is obtained using a machine learning model is compared with the position where the component is permitted to have shallow wear, and the size of a crack that is obtained using a machine learning model is compared with the maximum size of crack permitted on the component, in order to judge whether to replace the component.

Only some examples of judging whether to replace the component based on the identification result and the predetermined criterion of the component have been set out above. In other examples, other predetermined criteria may also be set as required.

In some embodiments, the identification result comprises the position of an identified surface defect on the component, and the method 100 further comprises: adding a visual marker at this position on the image via a display interface. The operator may view the visual marker via the display interface. Indicating the position of the surface defect on the image helps the operator to perform operations such as viewing, recording, further confirmation, servicing/replacement of the component, etc. The visual marker may comprise a text annotation, a highlighted marker, a geometric shape marker, etc. Different visual markers may be set according to surface defect position, size, type, etc.

In some embodiments, the method 100 further comprises (not shown in Fig. 1): superimposing an electronic template on the image via a display interface, the electronic template being generated according to the predetermined criterion, and the position of the electronic template corresponding to the position of the component on the image. In some embodiments, when the electronic template is superimposed on the image, it may precisely cover the entire surface of the component to be checked on the image completely, i.e. the shape and size thereof are identical to the shape and size of the surface of the component, and the predetermined criterion is marked on the electronic template. For example, the electronic template may be an "electronic version" of the surface of the component with multiple surface defects marked thereon; the positions, quantity, sizes and/or shapes (indicating the surface defect types) of these surface defects may separately indicate the positions of different types of surface defect permitted on the component, the maximum number of different types of surface defect permitted on the component, the maximum sizes of different types/positions of surface defect permitted on the component, and/or the types of surface defect that the component is permitted to have, and so on. In other embodiments, when the electronic template is superimposed on the image, the electronic template may only cover part of the surface of the component on the image, e.g. need not cover positions where surface defects will generally not be present.

In some embodiments, the method 100 further comprises (not shown in Fig. 1): obtaining an identifier of the component according to the image; and determining the predetermined criterion based on the identifier of the component. If it is necessary to check multiple types of component, the predetermined criteria of these components might be different. These different predetermined criteria may be stored in a memory in advance; when required, the memory may be accessed according to the component type to obtain the corresponding predetermined criterion. The identifier of the component may be the type of the component or a unique identification code of the component, as long as the identifier of the component is matched to the corresponding predetermined criterion and stored in advance.

In some embodiments, the method 100 further comprises (not shown in Fig. 1): upon determining that the component needs to be replaced, obtaining inventory information of the component; judging whether the component needs to be ordered based on the inventory information; and upon determining that the component needs to be ordered, sending an order request to a component ordering system. The inventory information may be obtained by sending a query request to an inventory system, and the inventory information may comprise: whether an inventory comprises the component of the type in question, and/or the number of components of the type in question in the inventory. If the inventory has no components of the type in question or the number is insufficient, an order request is sent to the component ordering system. The order request comprises the component type and the number ordered. After receiving the order request, the component ordering system may automatically place an order and notify a purchasing manager or warehouse manager.

In some embodiments, if it is necessary to check multiple components, then once checking of each component has finished, a component checking result may be generated and saved in a database; the checking result may comprise data such as the component identifier and type, the defect type, the checking time, and the result of judging whether replacement is needed. The data recorded may be used for component ordering, as a historical archive, for Big Data analysis, etc. In these embodiments, the component checking result may be acquired from the database, and information such as the quantity and type of the component requiring replacement may be obtained based on the checking result. Inventory information of the component requiring replacement may then be obtained from the inventory system, the inventory information comprising the number of components of the corresponding type. Based on the type and quantity of the component requiring replacement and the inventory information of the component, a judgment is made as to whether the component needs to be ordered. When the quantity of a component of a particular type requiring replacement is insufficient, an order request for that component must be sent to the component ordering system, the order request comprising the component type and the quantity ordered.

By judging whether the component needs to be ordered based on the inventory information of the component requiring replacement, it is possible to automatically perform a comparison with the inventory information and ordering of the component without the need for an operator, thus achieving complete automation of component checking, further saving time and manpower, and increasing the efficiency and accuracy of component replacement.

In some embodiments, it is further possible to judge whether a component needs to be serviced based on the identification result and the predetermined criterion of the component. When it is determined that the component needs to be serviced, a service request is sent to a component servicing system. After receiving the service request, the component servicing system may notify the relevant servicing worker of the mechanical equipment and component type, the component identifier (or position), and the surface defect identification result, etc. In some embodiments, it is further possible to sequentially judge whether the component needs to be serviced or replaced based on the identification result and the predetermined criterion of the component.

Compared with manual inspection, the method above for checking a component of mechanical equipment reduces the difficulty involved in checking the component, being able to identify a surface defect of the component and judge whether the component needs to be replaced more quickly and accurately, thereby increasing the working efficiency of maintenance engineers, saving physical effort, and shortening the time for which operation of the mechanical equipment is stopped to perform maintenance, and thus increasing the operating efficiency of the mechanical equipment. In addition, the entire method is performed automatically by computer, thus avoiding manual inspection errors, increasing the accuracy of the checking result, and thus increasing the reliability of mechanical equipment operation. In addition, compared with the detection of component surface defects based on geometric data of the component, the method above does not require a complex core algorithm to be developed, and avoids the difficulty and inaccuracy involved in obtaining geometric data of the component.

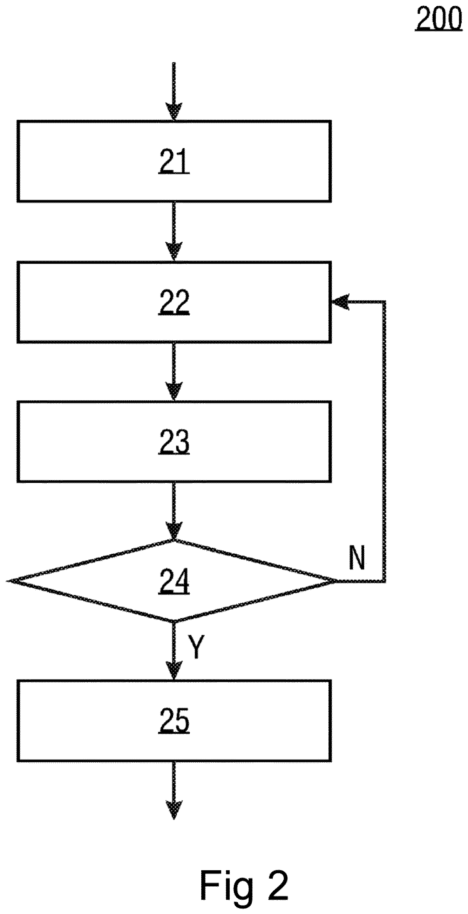

The method shown in Fig. 1 for checking a mechanical equipment component is explained below with reference to a specific embodiment. Figs. 2 - 9 show a specific procedure for checking a ceramic thermal insulation tile of a gas turbine. In this embodiment, software on a workstation/server is used to train a machine learning model for detecting cracks on ceramic thermal insulation tiles, and the trained machine learning model is saved in a memory of the workstation/server. A camera of a smartphone is used to acquire an image of a ceramic thermal insulation tile, and an application program (e.g. an Android app) on the smartphone is used for operations such as identifying a crack on the ceramic thermal insulation tile using the machine learning model, comparing with a predetermined criterion, etc. The smartphone can communicate with the workstation/server, in order to download the trained machine learning model from the workstation/server. The component ordering system may be another application program on the smartphone, or may be an application program or software on another computer device.

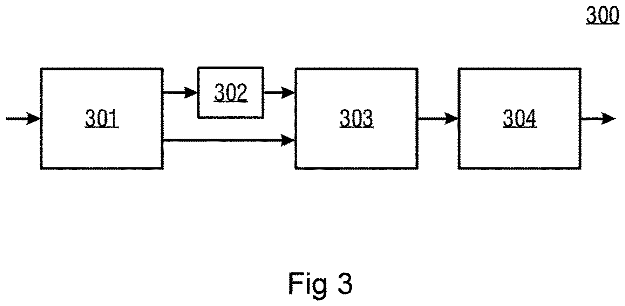

Fig. 2 shows a method for checking a ceramic thermal insulation tile of a gas turbine according to an embodiment of the present disclosure. The method 200 first of all comprises step 21: training a machine learning model. This step is explained in detail below with reference to Figs. 3 - 4. As stated above, in this embodiment, the training of the machine learning model and the application thereof take place on different computing devices. In other embodiments, the training of the machine learning model and the application thereof may take place on the same computing device.

Before the machine learning model is trained, it is first necessary to construct the machine learning model. In this embodiment, a neural network model is used as the machine learning model; specifically, a Faster-RCNN neural network is used as the machine learning model. Fig. 3 shows an exemplary architecture 300 of the machine learning model according to the embodiment of Fig. 2.

As shown in Fig. 3, a first part of the neural network 300 is a convolutional layer 301, and an image of a ceramic thermal insulation tile (or a sample image) serves as an input of the convolutional layer 301. In the convolutional layer 301, the inner product of a weight and a local region image pixel value is calculated, and a feature of the local region is thereby extracted; this process of calculation is repeated by sliding over the entire image, and feature information of the entire image relating to this weight vector is extracted. The features extracted from the image serve as an output of the convolutional layer 301, called a feature map.

Next, the output of the convolutional layer 301 is on the one hand inputted to a second part of the neural network 300, namely an RPN (Region Proposal Network) 302. In the RPN, first of all a judgment is made by means of a softmax classifier as to whether a number of preset candidate regions contain an object; in addition, a regression offset of the number of preset candidate regions is obtained. Then, based on the regression offset and a classification result of the softmax classifier for the candidate regions, more precise candidate regions are formed.

As shown in Fig. 3, the output of the convolutional layer 301 is on the other hand also inputted to a third part of the neural network 300, namely an ROI pooling layer (Region of Interest pooling layer) 303. In addition, an output of the RPN 302 is also inputted to the ROI pooling layer 303. In the ROI pooling layer 303, the candidate regions outputted by the RPN 302 and the feature map outputted by the convolutional layer 301 are used to obtain a candidate region feature map.

The candidate region feature map outputted by the ROI pooling layer 303 is inputted to a fourth part of the neural network 300, namely a classification and regression layer 304. In this layer, softmax is used as a classifier; the function of the classifier in this layer is to perform specific classification of the object for each candidate region, and output a category having the largest probability value as a classification result. In this embodiment, there is one classification category, namely a crack in the ceramic thermal insulation tile; therefore, when a crack is identified for each candidate region, the probability thereof is 100%. In addition, the classification and regression layer 304 also performs bounding box regression for the candidate region, so that the position and size of the candidate region are better matched to the position and size of the object. The position and size of the candidate region (e.g. the coordinates of the top left corner and the length/width dimensions of the candidate region in the image) may indicate the position of the identified object on the image or the component.

An example of the machine learning model used in this embodiment has been described above. In this embodiment, a classifier is used to identify surface defects in an input image, and an RPN is used to position the identified surface defects. In other embodiments, other neural network models or other machine learning models may also be used. For example, in the case of a particular component, there is no need to be interested in the specific position of a particular type of surface defect, so there is no need to perform positioning of a surface defect of this type that is identified.

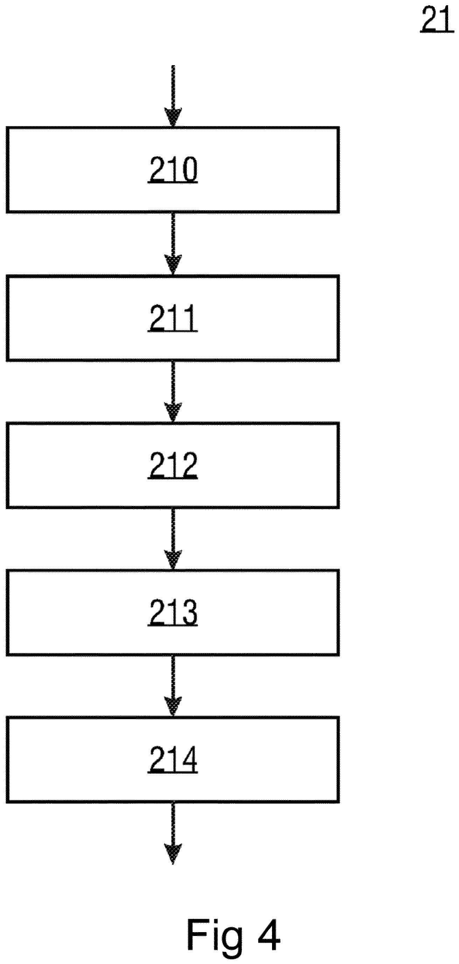

Now referring to Fig. 4, Fig. 4 shows a method for training a machine learning model according to the embodiment of Fig. 2. In the embodiment of Fig. 2, there is only one type of surface defect that needs to be checked, namely cracks on the ceramic thermal insulation tiles used in the combustion chamber of the gas turbine. Thus, in method 21, first of all, images 210 of ceramic thermal insulation tiles having cracks are collected. In the prior art, maintenance engineers will generally take photographs of ceramic thermal insulation tiles having cracks while inspecting ceramic thermal insulation tiles, to be stored in a factory database as a record. Thus, the workstation/server used to train the machine learning model may acquire these historical images from the factory database, and save them in a memory, in order to subsequently obtain sample images for training the machine learning model.

Next, in step 211, cracks are marked on the historical images of ceramic thermal insulation tiles. A worker may use a marking tool provided by software to mark cracks on the images one by one, e.g. add rectangular boxes around the cracks. In step 212, marked regions on the images (i.e. regions covered by the rectangular boxes) are extracted. The marked regions may be extracted from the images by software based on the coordinates and sizes of the rectangular boxes on the images. Once these marked regions have been extracted, they are saved in a memory as sample images of cracks on the ceramic thermal insulation tiles, and the types of surface defects (e.g. cracks) are labelled, for the purpose of subsequently adjusting parameters/weights in the model in the process of training the model.

Then in step 213, some or all of the sample images are selected from the sample images, for use in model training. In this embodiment, 90% of the sample images are selected at random as model training samples; the remaining 10% of the sample images serve as test samples for testing the model when model training has ended. In other embodiments, all of the sample images may be used as model training samples, or another proportion of sample images may be selected at random as model training samples.

When the training samples have been selected, in step 214, the sample images serving as training samples are separately inputted to the machine learning model to perform model training. As stated above, in this embodiment, a Faster RCNN model is used as the machine learning model. For each inputted sample image, the Faster RCNN model extracts features from the image currently being processed in order to generate a feature map, and identifies and positions cracks based on the feature map.

Then, for the image currently being processed, an actual classification marker of the image and a crack position are compared with an output of the machine learning model, and a weight/parameter of the machine learning model is adjusted based on an error therebetween (e.g. a loss function). For example, an optimization algorithm may be used to solve the minimum value of the loss function, and each weight/parameter in the machine learning model is thereby updated. Once the weight/parameter of the machine learning model has been updated, the above process is repeated for the next inputted sample image. The sample images serving as the training samples may be used repeatedly, until the machine learning model converges, with each weight/parameter tending towards stability. When the machine learning model converges, this indicates that the model has been trained, and it may be stored in a memory in text file format. Next, the test images selected from the sample images may be used to verify the usability and accuracy of the trained model.

In the process of training the model, the RPN and other parts of the model may be trained individually and iteratively, or end-to-end training of the entire model may be performed.

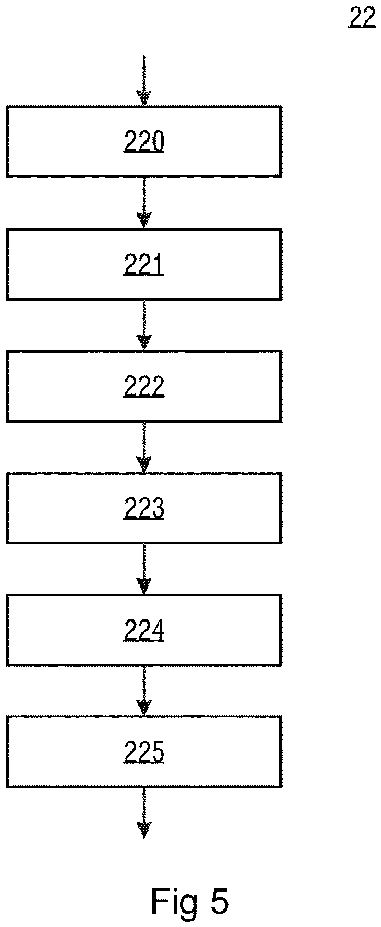

Returning to Fig. 2, once the machine learning model has been trained in step 21, the method 200 proceeds to step 22. In step 22, the trained machine learning model is used to identify a crack on a ceramic thermal insulation tile. This step is explained in detail below with reference to Figs. 5 - 6. In this embodiment, an application program installed on a smartphone carried by a maintenance engineer detects the crack on the ceramic thermal insulation tile. The smartphone may communicate with the workstation/server in which the trained machine learning model is saved, in order to download the machine learning model by means of the application program.

Fig. 5 shows the method for using the trained machine learning model to identify a crack on a ceramic thermal insulation tile according to the embodiment of Fig. 2. In Fig. 5, the first step 220 in identifying the crack on the ceramic thermal insulation tile is to obtain an image of the ceramic thermal insulation tile. In this embodiment, the maintenance engineer uses a camera of the smartphone to take a photograph of the ceramic thermal insulation tile to be checked. Multiple ceramic thermal insulation tiles will generally be arranged close together; thus, the photograph that is taken comprises not only the ceramic thermal insulation tile to be checked but also other ceramic thermal insulation tiles located above, below, to the left and to the right of it. In order to increase the accuracy of crack identification and the accuracy of subsequent comparison of the identification result with the predetermined criterion, edges of the ceramic thermal insulation tile are detected in step 221, to define the region of the ceramic thermal insulation tile on the image. In this embodiment, the maintenance engineer uses a marking tool provided by the application program to mark on the image the four vertices of the ceramic thermal insulation tile to be checked (the ceramic thermal insulation tile being square), then the application program identifies and connects these four points to obtain the edges of the ceramic thermal insulation tile to be checked. In other embodiments, a corresponding algorithm may be designed to enable the application program to automatically identify the edges of the ceramic thermal insulation tile.

In addition, depending on the angle of capture or the degree of operational proficiency, etc., the ceramic thermal insulation tile to be checked might be inclined in the photograph that is taken, e.g. if the maintenance engineer did not take the photograph from the front of the ceramic thermal insulation tile, but instead took the photograph at an angle to the front of the ceramic thermal insulation tile. In order to increase the accuracy of subsequent crack identification, an affine transformation is used to correct the image in step 222. In other embodiments, in addition to edge detection and affine transformation, the image of the ceramic thermal insulation tile may also be subjected to other pre-processing as required, e.g. smoothing, filtering, contrast stretching, etc.

Next, in step 223, an identifier of the ceramic thermal insulation tile is obtained. The identifier may be obtained for the purpose of subsequent recording of the checking result and comparison with the predetermined criterion. An artificially marked identifier (e.g. a unique identification code such as a serial number) will generally be present on the ceramic thermal insulation tile; thus, in this embodiment, the identifier may be identified in the image of the ceramic thermal insulation tile by using OCR (Optical Character Recognition) technology. In other embodiments, the identifier may be inputted manually by a maintenance worker.

Then in step 224, the image of the ceramic thermal insulation tile that has undergone edge identification and affine transformation is inputted to the trained machine learning model. As stated above, in this embodiment, the machine learning model is a Faster RCNN model. The convolutional layer thereof extracts features from the image of the ceramic thermal insulation tile that is currently being processed, in order to form a feature map, and the RPN obtains preliminary candidate regions based on the feature map. Next, the ROI pooling layer obtains a candidate region feature map based on the feature map and the preliminary candidate regions provided by the RPN. Finally, for each candidate region, the classification and regression layer identifies a crack therein based on the candidate region feature map, and subjects a candidate region having a crack to bounding box regression, outputting the coordinates of the top left corner and the length/width dimensions of the candidate region (i.e. indicating the position of the crack on the image or on the ceramic thermal insulation tile).

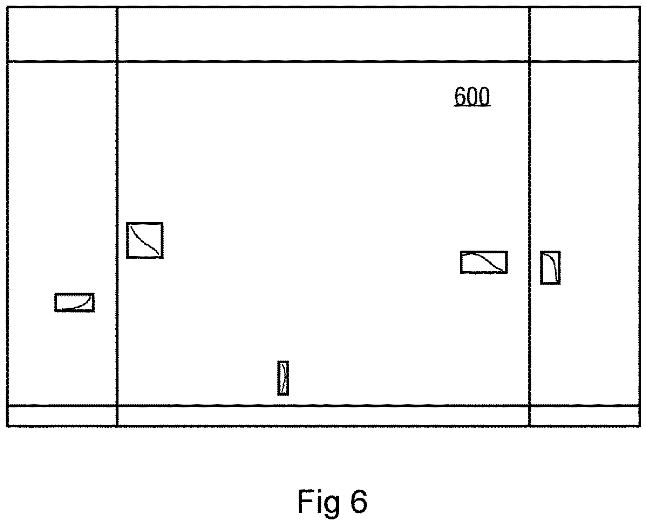

Next, in step 225, if the ceramic thermal insulation tile currently being checked has a crack, then based on the coordinates and length/width dimensions of the candidate region outputted by the machine learning model, a visual marker is added at the corresponding position on the image, and displayed via a display interface. Fig. 6 shows an example of visual markers added at crack positions on the image of the ceramic thermal insulation tile according to the embodiment of Fig. 2. It can be seen from Fig. 6 that three cracks have been identified on the ceramic thermal insulation tile currently being checked, and three rectangular boxes (i.e. candidate regions resulting from regression that are outputted by the machine learning model) have been used to surround these three cracks, in order to provide the maintenance engineer with a visual indication. In addition, text annotations may also be attached next to the rectangular boxes, e.g. the type of the defect (a crack) and the corresponding probability that the defect is of this type (100%). In this embodiment, only one type of defect is detected, so only one type of visual marker is added on the image. In other embodiments, if two or more types of defect are detected, different visual markers may be used to indicate different types of defect; for example, a rectangular box is used to mark a crack, a circle is used to mark a spot, and so on.

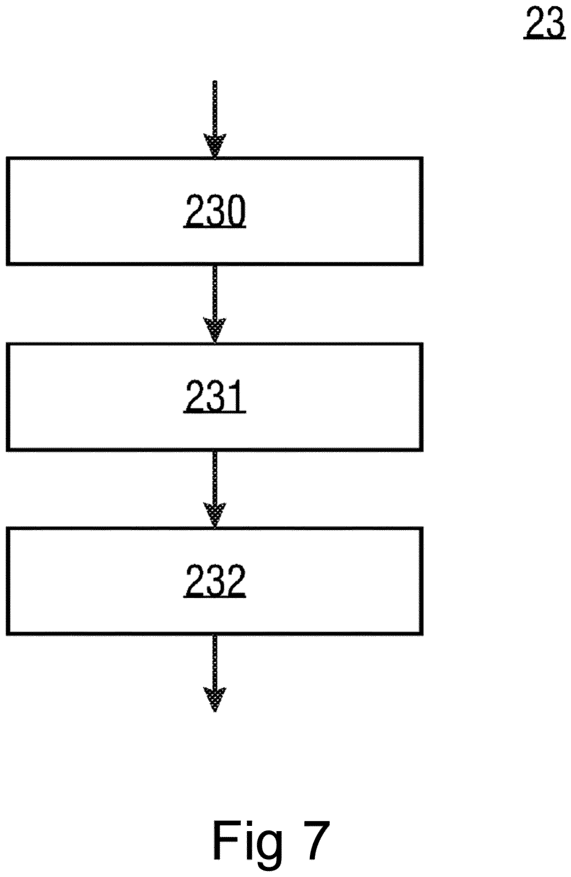

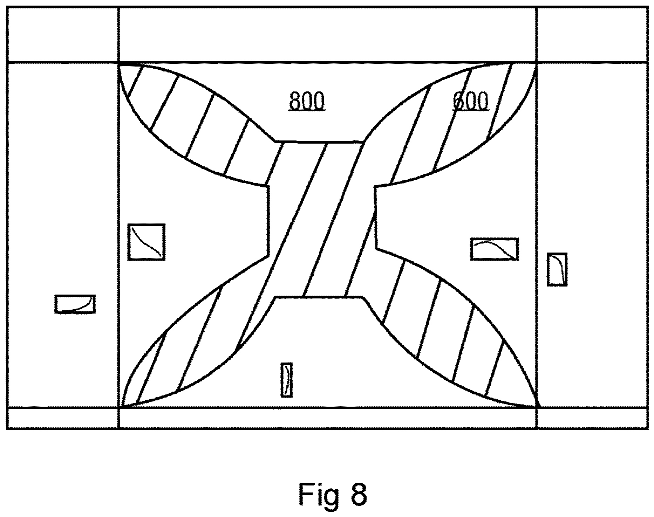

Returning to Fig. 2 to continue the explanation of the method 200, step 22 is followed by step 23. In step 23, based on the identification result and the electronic template of the ceramic thermal insulation tile, a judgment is made as to whether the ceramic thermal insulation tile currently being checked needs to be replaced. In this embodiment, the predetermined criterion for judging whether the ceramic thermal insulation tile needs to be replaced is the electronic template of the same shape and size as the ceramic thermal insulation tile, with positions where cracks are permitted to appear being marked on the electronic template. When a crack is identified on the ceramic thermal insulation tile currently being checked, the image of the ceramic thermal insulation tile and the electronic template are superposed for comparison, in order to judge whether the identified crack has appeared at a position permitted on the ceramic thermal insulation tile; if so, the ceramic thermal insulation tile does not need to be replaced, otherwise the ceramic thermal insulation tile currently being checked needs to be replaced. This step is explained in detail below with reference to Figs. 7 and 8.

Fig. 7 shows the method for judging whether the ceramic thermal insulation tile currently being checked needs to be replaced based on the identification result and the electronic template of the ceramic thermal insulation tile according to the embodiment of Fig. 2. First of all, in step 230, the electronic template of the ceramic thermal insulation tile currently being checked is obtained, and superimposed on the image of the ceramic thermal insulation tile via the display interface. The position of the electronic template corresponds to the position of the ceramic thermal insulation tile currently being checked on the image. Electronic templates of components of different types may be stored in the memory of the maintenance engineer's smartphone or the workstation/server. Thus, it is possible to identify the identifier of the ceramic thermal insulation tile currently being checked, and use this identifier to determine the electronic template corresponding thereto. Fig. 8 shows an example of an electronic template superimposed on the image of the ceramic thermal insulation tile. As shown in Fig. 8, the electronic template 800 is superimposed on the image of the ceramic thermal insulation tile, and the position thereof coincides with the position of the ceramic thermal insulation tile 600 currently being checked on the image.

After step 230, the method 23 proceeds to step 231: judging whether the ceramic thermal insulation tile needs to be replaced according to the crack position and the electronic template of the ceramic thermal insulation tile. The shaded region in Fig. 8 indicates positions where cracks are not permitted on the ceramic thermal insulation tile; the regions outside the shaded region indicate positions where cracks are permitted on the ceramic thermal insulation tile. If a crack on the ceramic thermal insulation tile is located in the shaded region, the ceramic thermal insulation tile needs to be replaced. In this embodiment, an application program may judge whether cracks are located in the shaded region by calculating whether the polygon formed by the shaded region on the electronic template 800 overlaps the rectangular boxes surrounding the cracks. In the example of Fig. 8, the three cracks on the ceramic thermal insulation tile currently being checked are all located outside the shaded region, so the judgment result is that the ceramic thermal insulation tile does not need to be replaced.

Then in step 232, the checking result for the ceramic thermal insulation tile is recorded in a database; the checking result may comprise the identifier and type of the ceramic thermal insulation tile, the defect type, the checking time, the name of the electronic template used, and the result of judging whether replacement is needed. The data recorded may be used for ordering ceramic thermal insulation tiles, as a historical archive, for Big Data analysis, etc. Table 1 shows part of the database.

**Table 1**

| Checking result | | | | | | |
|---|---|---|---|---|---|---|
| No. | Identifier/ position | Template name | Replace (Y/N) | Component type | Time (DD/MM/YY) | Defect type |
| 1 | N1 | Nabe01-Hot | Y | 100013 | xx/xx/2019 10:36:55 | Crack |
| 2 | N1 | Nabe01-Hot | Y | 100013 | xx/xx/2019 10:38:28 | Crack |
| 3 | N2 | Nabe01-Hot | Y | 100013 | xx/xx/2019 13:50:01 | Crack |
| 4 | N3 | Nabe01-Hot | N | 100013 | xx/xx/2019 13:50:52 | Crack |
| 5 | N4 | Nabe01-Hot | N | 100013 | xx/xx/2019 13:51:35 | Crack |
| 6 | N5 | Nabe01-Hot | Y | 100013 | xx/xx/2019 13:52:17 | Crack |

As shown in Table 1, N1 - N5 in the second column are ceramic thermal insulation tile identifiers, and because each ceramic thermal insulation tile is at a different position when installed in the combustion chamber, the identifiers also indicate the positions of the ceramic thermal insulation tiles in the combustion chamber. In addition, it can be seen from Table 1 that the ceramic thermal insulation tile with serial number N1 was checked twice, so there are two records for this ceramic thermal insulation tile. The third column is the template name, which indicates the electronic template used when checking the ceramic thermal insulation tiles. In this embodiment, N1 - N5 are completely identical ceramic thermal insulation tiles, so they all use the same electronic template. In other embodiments, as stated above, the electronic template might vary with component type. The fourth column is the result of judging whether replacement is needed; this is obtained based on the result of comparing the electronic template with the position of the crack identified on the ceramic thermal insulation tile. The fifth column is the component type; since the ceramic thermal insulation tiles N1 - N5 are completely identical components, they are of the same type. In other embodiments, if components of different types are checked, other component types may be recorded in the fifth column. The sixth column and the seventh column are the checking time and the type of the identified defect, respectively. In this embodiment, the seventh column contains only one type of defect, because only cracks on the ceramic thermal insulation tiles were checked. In other embodiments, if other types of surface defect are checked, other defect types may be recorded in the seventh column.

In addition to having the information in Table 1 above recorded in the database, in this embodiment, a simulated view of the interior of the combustion chamber may also be displayed via a display interface of the smartphone. In this view, the positions of the ceramic thermal insulation tiles in the combustion chamber are shown in the same manner as they are actually arranged in the combustion chamber, and the identifier of the corresponding ceramic thermal insulation tile is labelled at each position. In addition, a different color may be used at each position to indicate whether the ceramic thermal insulation tile at that position needs to be replaced. For example, when a blue color is displayed at a particular position, this indicates that the ceramic thermal insulation tile at that position does not need to be replaced; when a gray color is displayed at a particular position, this indicates that the ceramic thermal insulation tile at that position needs to be replaced. In other embodiments, if different types of component are checked, different colors/appearances or other features may be used to visually distinguish between different components and the checking results thereof.

Returning to Fig. 2, in step 24, a judgment is made as to whether all of the ceramic thermal insulation tiles in the combustion chamber have been checked. A judgment may be made as to whether any unchecked ceramic thermal insulation tiles are present based on the identifiers of the ceramic thermal insulation tiles obtained previously. In step 24, if the judgment result is negative, i.e. an unchecked ceramic thermal insulation tile is still present, the method returns to step 22, continuing to use the trained machine learning model to check the next ceramic thermal insulation tile. If the judgment result is positive, i.e. all of the ceramic thermal insulation tiles have been checked, the method 200 proceeds to step 25.

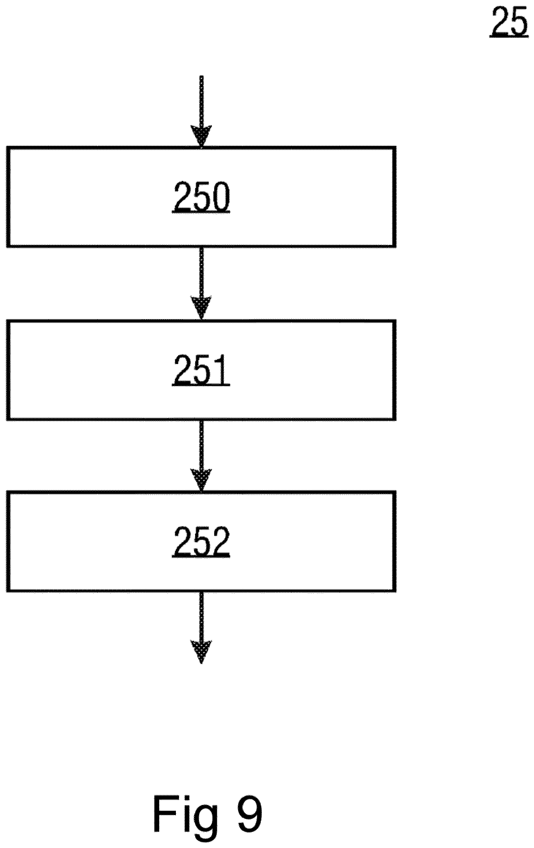

In step 25, a ceramic thermal insulation tile is ordered from the component ordering system based on the checking result and the inventory information. This step is explained in detail below with reference to Fig. 9. Fig. 9 shows the method for ordering the ceramic thermal insulation tile from the component ordering system based on the checking result and the inventory information according to the embodiment of Fig. 2. First of all, in step 250, the checking result is acquired from the database, and the type and quantity of the ceramic thermal insulation tile that needs to be replaced is obtained based on the checking result. The database may be located in the memory of the workstation/server and/or the smartphone. Taking Table 1 as an example, the type of the ceramic thermal insulation tile that needs to be replaced is 100013, and the quantity is 3.

Then in step 251, an inventory quantity of the ceramic thermal insulation tile of the corresponding type is acquired from the inventory system, and the type and quantity of the ceramic thermal insulation tile that needs to be ordered are calculated. An application program sends a query request comprising the ceramic thermal insulation tile type to the inventory system, and calculates the type/quantity of the ceramic thermal insulation tile that needs to be ordered based on the type and quantity of the ceramic thermal insulation tile that needs to be replaced and the inventory quantity of the corresponding type that is returned by the inventory system. For example, the information returned by the inventory system is that the quantity of the ceramic thermal insulation tile of type 100013 is 0, so the quantity of ceramic thermal insulation tiles of this type that need to be ordered is calculated as 3. In step 252, an order request is sent to the component ordering system, the order request comprising the type and quantity of the ceramic thermal insulation tile that needs to be ordered.

Through the method described above for ordering a component, it is possible to automatically perform a comparison with the inventory information and ordering of the component without the need for an operator, thus achieving complete automation of component checking, and further saving time and manpower, thus increasing the efficiency and accuracy of component replacement.

Compared with manual inspection, the method above for checking a component of mechanical equipment reduces the difficulty involved in checking the component, being able to identify a surface defect of the component and judge whether the component needs to be replaced more quickly and accurately, thereby increasing the working efficiency of maintenance engineers, saving physical effort, and shortening the time for which operation of the mechanical equipment is stopped to perform maintenance, and thus increasing the operating efficiency of the mechanical equipment. In addition, the entire method is performed automatically by computer, thus avoiding manual inspection errors, increasing the accuracy of the checking result, and thus increasing the reliability of mechanical equipment operation. In addition, compared with the detection of component surface defects based on geometric data of the component, the method above does not require a complex core algorithm to be developed, and avoids the difficulty and inaccuracy involved in obtaining geometric data of the component.

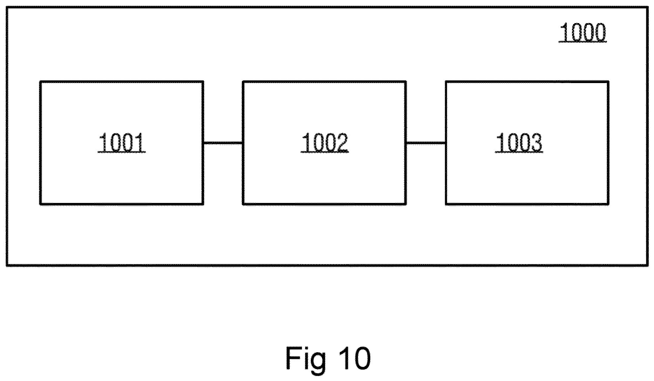

Fig. 10 shows an apparatus for checking a mechanical equipment component according to an embodiment of the present disclosure. Referring to Fig. 10, the apparatus 1000 comprises an image acquisition unit 1001, a defect identification unit 1002 and a criterion comparison unit 1003. The image acquisition unit 1001 is configured to acquire an image of a component. The defect identification unit 1002 is configured to use a machine learning model to extract a feature from the image, and identify at least one type of surface defect of the component based on the feature, to obtain an identification result. The criterion comparison unit 1003 is configured to judge whether to replace the component based on the identification result and a predetermined criterion of the component. Each unit in Fig. 10 may be realized using software, hardware (e.g. an integrated circuit, FPGA, etc.) or a combination of software and hardware.

In some embodiments, the identification result comprises the position of an identified surface defect on the component, and the apparatus 1000 further comprises a result indicating unit (not shown in Fig. 10), which is configured to add a visual marker at this position on the image via a display interface.

In some embodiments, the criterion comparison unit 1003 is further configured to: superimpose an electronic template generated according to the predetermined criterion on the image via the display interface, the position of the electronic template corresponding to the position of the component on the image.

In some embodiments, the identification result comprises at least one of the following: the position of a surface defect on the component, the number of surface defects, the surface defect size, and the surface defect type.

In some embodiments, the predetermined criterion comprises at least one of the following: a position where the component is permitted to have a surface defect, the maximum number of surface defects permitted on the component, the maximum size of surface defect permitted on the component, and a type of surface defect that the component is permitted to have.

In some embodiments, the apparatus 1000 further comprises a component ordering unit (not shown in Fig. 10), which is configured to: obtain inventory information of the component when it is determined that the component needs to be replaced; judge whether the component needs to be ordered, based on the inventory information; and send an order request to the component ordering system when it is determined that the component needs to be ordered.

In some embodiments, the criterion comparison unit 1003 is further configured to: obtain an identifier of the component according to the image; and determine the predetermined criterion based on the identifier of the component.

In some embodiments, an image pre-processing unit (not shown in Fig. 10) is further included, and configured to: before the machine learning model is used, detect an edge of the component in the image; and subject the image to an affine transformation, in order to correct the image.

In some embodiments, the machine learning model is trained based on a sample image of at least one type of surface defect.

In some embodiments, the machine learning model is a neural network model.

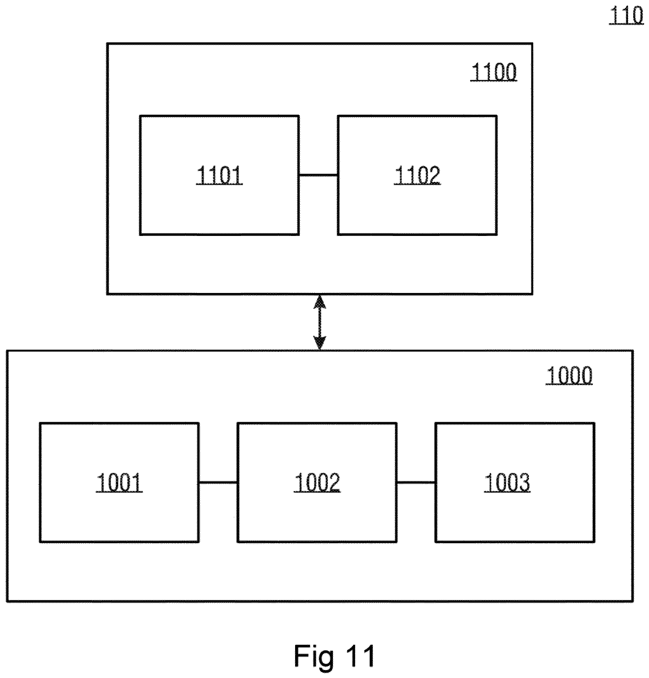

Fig. 11 shows a system for checking a mechanical equipment component according to an embodiment of the present disclosure. Referring to Fig. 11, the system 110 comprises an apparatus 1100 for training a machine learning model and an apparatus 1000 for checking the mechanical equipment component. The apparatus 1000 is the same as the apparatus 1000 described in Fig. 10, so is not described again here. The apparatus 1100 for training a machine learning model comprises a sample generating unit 1101 and a model training unit 1102. The sample generating unit 1101 is configured to obtain a training sample, the training sample comprising a sample image of a surface defect of the component and a corresponding classification marker. The model training unit 1102 is configured to train a machine learning model based on the training sample, in order to generate a trained machine learning model.

In some embodiments, the apparatus 1100 further comprises a defect extraction unit (not shown in Fig. 11), configured to obtain labelling information of a surface defect on the image of the component, and acquire a sample image of the labelled surface defect from the image of the component based on the labelling information.

In some embodiments, the apparatus 1100 further comprises a model providing unit (not shown in Fig. 11), configured to receive a request for a machine learning model, and provide a trained machine learning model based on the request.

In some embodiments, the machine learning model is trained based on a sample image of at least one type of surface defect.

In some embodiments, the machine learning model is a neural network model.

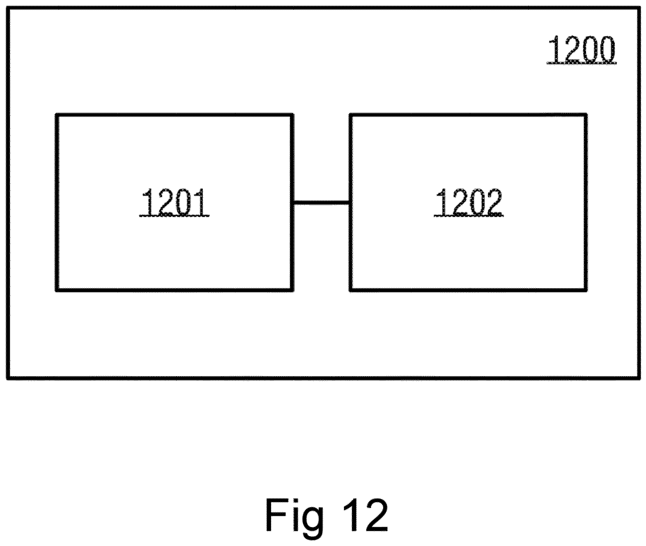

Fig. 12 shows a block diagram of a computing device 1200 for checking a mechanical equipment component according to an embodiment of the present disclosure. It can be seen from Fig. 12 that the computing device 1200 for checking a mechanical equipment component comprises a processor 1201 and a memory 1202 coupled to the processor 1201. The memory 1202 is used to store computer-executable instructions; when the computer-executable instructions are executed, the processor 1201 is caused to perform the method in the above embodiments.

In addition, alternatively, the method described above may be implemented by means of a computer-readable storage medium. The computer-readable storage medium carries computer-readable program instructions for executing the various embodiments of the present disclosure. The computer-readable storage medium may be a tangible device capable of holding and storing instructions used by an instruction-executing device. The computer-readable storage medium may for example be, but is not limited to, an electrical storage device, a magnetic storage device, an optical storage device, an electromagnetic storage device, a semiconductor storage device, or any suitable combination of the above. More specific examples (a non-exhaustive list) of computer-readable storage media include: a portable computer disk, hard disk, random access memory (RAM), read-only memory (ROM), erasable programmable read-only memory (EPROM or flash memory), static random access memory (SRAM), portable compressed disk read-only memory (CD-ROM), digital versatile disk (DVD), memory stick, floppy disk, mechanical coding equipment, such as a protrusion-in-groove structure or punched card with instructions stored thereon, and any suitable combination of the above. The computer-readable storage medium used here is not interpreted as a transient signal itself, such as radio waves or other freely propagating electromagnetic waves, electromagnetic waves propagated through a wave guide or another transmission medium (e.g. light pulses through an optic fiber cable), or electrical signals transmitted through electric wires.

Thus, in another embodiment, the present disclosure proposes a computer-readable storage medium, the computer-readable storage medium having stored thereon computer-executable instructions for performing the method in the various embodiments of the present disclosure.

In another embodiment, the present disclosure proposes a computer program product, the computer program product being tangibly stored on a computer-readable storage medium and comprising computer-executable instructions which, when executed, cause at least one processor to perform the method in the various embodiments of the present disclosure.

In general, the various exemplary embodiments of the present disclosure may be implemented in hardware or dedicated circuitry, software, firmware, logic, or any combination thereof. Certain aspects may be implemented in hardware, and other aspects may be implemented in firmware or software executable by a controller, microprocessor or other computing device. When the aspects of embodiments of the present disclosure are illustrated or described as block diagrams/flow charts or shown using other graphical forms, it will be understood that the boxes, apparatus, system, technology or method described here may be implemented as a non-limiting example in hardware, software, firmware, dedicated circuitry or logic, general-purpose hardware or a controller or another computing device, or in combinations thereof.

The computer-readable program instructions or computer program product used to execute the various embodiments of the present disclosure may also be stored in the cloud, and when they need to be called, a user may access the computer-readable program instructions which are stored in the cloud and used to execute an embodiment of the present disclosure via mobile internet, a fixed network or another network, so as to implement the technical solution disclosed according to the various embodiments of the present disclosure.

Although the embodiments of the present disclosure have already been described with reference to a number of specific embodiments, it should be understood that the embodiments of the present disclosure are not limited to the specific embodiments disclosed. The embodiments of the present disclosure are intended to encompass various amendments and equivalent arrangements included in the spirit and scope of the attached claims. The scope of the claims conforms to the broadest interpretation, and thus includes all such amendments and equivalent structures and functions.

## Claims

1. A method for checking a mechanical equipment component, comprising:
acquiring an image of the component;
using a machine learning model to extract a feature from the image, and identifying at least one type of surface defect of the component based on the feature, to obtain an identification result; and
judging whether to replace the component based on the identification result and a predetermined criterion of the component.

2. The method as claimed in claim 1, wherein the identification result comprises a position of the identified surface defect on the component, and the method further comprises:
adding a visual marker at said position on the image via a display interface.

3. The method as claimed in claim 1, further comprising:
superimposing an electronic template generated according to the predetermined criterion on the image via a display interface, a position of the electronic template corresponding to a position of the component on the image.

4. The method as claimed in claim 1, wherein the identification result comprises at least one of the following: a position of the surface defect on the component, a quantity of the surface defect, a size of the surface defect, and a type of the surface defect.

5. The method as claimed in claim 1, wherein the predetermined criterion comprises at least one of the following: a position where the component is permitted to have the surface defect, a maximum quantity of the surface defect permitted on the component, a maximum size of the surface defect permitted on the component, and a type of surface defect that the component is permitted to have.

6. The method as claimed in claim 1, further comprising:
upon determining that the component needs to be replaced, obtaining inventory information of the component;
judging whether the component needs to be ordered based on the inventory information; and
upon determining that the component needs to be ordered, sending an order request to a component ordering system.

7. The method as claimed in claim 1, further comprising:
obtaining an identifier of the component according to the image; and
determining the predetermined criterion based on the identifier of the component.

8. The method as claimed in claim 1, wherein before using the machine learning model for identification, the method further comprises:
detecting an edge of the component in the image; and
subjecting the image to an affine transformation, to correct the image.

9. The method as claimed in claim 1, wherein the machine learning model is trained based on a sample image of the at least one type of surface defect.

10. The method as claimed in claim 1, wherein the machine learning model is a neural network model.

11. An apparatus for checking a mechanical equipment component, comprising:
an image acquisition unit, configured to acquire an image of the component;
a defect identification unit, configured to use a machine learning model to extract a feature from the image, and identify at least one type of surface defect of the component based on the feature, to obtain an identification result; and
a criterion comparison unit, configured to judge whether to replace the component based on the identification result and a predetermined criterion of the component.

12. The apparatus as claimed in claim 11, wherein the identification result comprises a position of the identified surface defect on the component, and the apparatus further comprises a result indicating unit, configured to:
add a visual marker at said position on the image via a display interface.

13. The apparatus as claimed in claim 11, wherein the criterion comparison unit is further configured to:
superimpose an electronic template generated according to the predetermined criterion on the image via a display interface, a position of the electronic template corresponding to a position of the component on the image.

14. The apparatus as claimed in claim 11, wherein the identification result comprises at least one of the following: a position of the surface defect on the component, a quantity of the surface defect, a size of the surface defect, and a type of the surface defect.

15. The apparatus as claimed in claim 11, wherein the predetermined criterion comprises at least one of the following: a position where the component is permitted to have the surface defect, a maximum quantity of the surface defect permitted on the component, a maximum size of the surface defect permitted on the component, and a type of surface defect that the component is permitted to have.

16. The apparatus as claimed in claim 11, further comprising a component ordering unit, configured to:
obtain inventory information of the component when it is determined that the component needs to be replaced;
judge whether the component needs to be ordered based on the inventory information; and
send an order request to a component ordering system when it is determined that the component needs to be ordered.

17. The apparatus as claimed in claim 11, wherein the criterion comparison unit is further configured to:
obtain an identifier of the component according to the image; and
determine the predetermined criterion based on the identifier of the component.

18. The apparatus as claimed in claim 11, further comprising an image pre-processing unit, configured to:
before the machine learning model is used for identification, detect an edge of the component in the image; and
subject the image to an affine transformation, to correct the image.

19. The apparatus as claimed in claim 11, wherein the machine learning model is trained based on a sample image of the at least one type of surface defect.

20. The apparatus as claimed in claim 11, wherein the machine learning model is a neural network model.

21. A computing device, comprising:
a processor; and
a memory, for storing a computer-executable instruction; when the computer-executable instruction is executed, the processor is caused to perform the method as claimed in any one of claims 1 - 10.

22. A computer-readable storage medium, having stored thereon a computer-executable instruction for performing the method as claimed in any one of claims 1 - 10.

23. A computer program product, tangibly stored on a computer-readable storage medium and comprising a computer-executable instruction which, when executed, causes at least one processor to perform the method as claimed in any one of claims 1 - 10.
